Europäisches Patentamt

European Patent Office

Office européen des brevets

(19)

(11) Veröffentlichungsnummer: **0 150 414**
**B1**

## (12) EUROPÄISCHE PATENTSCHRIFT

(45) Veröffentlichungstag der Patentschrift:
02.09.87

(21) Anmeldenummer: **84115624.3**

(22) Anmeldetag: **17.12.84**

(51) Int. Cl.⁴: **B 23 D 79/02**

(54) **Vorrichtung zum Innenentgraten längsnahtgeschweisster Rohre oder Profile.**

(30) Priorität: **27.12.83 DE 3347146**

(43) Veröffentlichungstag der Anmeldung:
**07.08.85 Patentblatt 85/32**

(45) Bekanntmachung des Hinweises auf die Patenterteilung:
**02.09.87 Patentblatt 87/36**

(84) Benannte Vertragsstaaten:
**AT BE CH DE FR GB IT LI LU NL SE**

(56) Entgegenhaltungen:
**AU-B-450 099**
**DE-A-3 219 369**
**DE-C-2 653 236**
**DE-C-2 940 874**
**US-A-2 233 928**
**US-A-3 165 028**
**US-A-3 570 089**

(73) Patentinhaber: **Techno Saarstahl GmbH,
Bismarckstrasse 57, D-6620 Völklingen (DE)**

(72) Erfinder: **Altmeyer, Werner, Dr. rer. nat.,
Freiligrathstrasse 21, D-6620 Völklingen (DE)**
Erfinder: **Jakobs, Ewald, Leipziger Strasse 74,
D-6626 Bous (DE)**
Erfinder: **Meier, Friedrich, Stettiner Strasse 29,
D-5630 Remscheid (DE)**

(74) Vertreter: **Viёl, Georg, Dipl.- Ing., Am Zimmerplatz
16, D-6606 Saarbrücken- Gersweiler (DE)**

## Beschreibung

Die Erfindung betrifft eine Vorrichtung nach dem Oberbegriff des Hauptanspruches.

Bei einer bekannten gattungsgemäßen Vorrichtung (DE-C- 29 40 874) mit einem stehend befestigten Schneidring ist insbesondere bei größeren Unebenheiten und schräg verlaufendem Innengrat kein optimales Entgraten möglich. Auch ist ein relativ großer Verschleiß des Schneidrings zu beobachten.

Bei einer anderen bekannten Vorrichtung (DE-C- 26 53 236) ist der Werkzeugaufnahmekopf zwar beweglich angeordnet, aber nur, um ihn verstellen zu können. Dieses Verstellen aus der Achslinie des Rohres geschieht mit Hilfe einer Schraube und das Verklemmen des Kopfes über eine Klemmschraube. Während des Innenentgratens ist der Werkzeugaufnahmekopf fest mit dem Werkzeugschaft verbunden

Der Erfindung liegt die Aufgabe zugrunde, die besagten Vorrichtungen mit dem Ziel einer bestmöglichen Führung und geringen Verschleißes des Schneidriges weiter zu vollkommnen.

Diese Aufgabe wird erfindungsgemäß durch die Merkmale des Hauptranspruches gelöst.

Eine andere Ausbildung der Erfindung besteht darin, daß der Grundkörper aus einem feststehenden und einem daran angelenkten drehbaren Teil besteht, auf dem der Schneidring an einem auswechselbaren Schneidringhalter befestigt ist.

Zweckmäßigerweise wird die Verbindung zwischen auswechselbarem Schneidringhalter und schwenkbarem Teil schwalbenschwansförmig ausgebildet.

Erfindungsgemäß ist auch vorgesehen, daß der Schneidring mitt einer außen an ihm angreifenden Spannschraube befestigt ist.

Dadurch, daß der Schneidring außen gespannt wird, ist es möglich, ihn innen so auszubilden, wie es die Gegebenheiten erfordern. Beispiele sind in den Kennzeichen der Ansprüche 5, 6 und 7 angegeben.

Der Schneidring ist nach der Erfindung liegend angeordnet. Es hat sich als vorteilhaft erwiesen, wenn er unter einem Winkel von 20 bis 30° zur Längsachse des Rohres oder Profils angeordnet ist.

Die mit der Erfindung erzielten Vorteile bestehen im wesentlichen darin, daß eine sozusagen dem Innengrat nachlaufende bzw. sich selbst justierende Schneide vorhanden ist, was einen glatten Schnitt ergibt und eine hohe Standzeit des Schneidrings mit sich bringt.

Ausführungsbeispiele sind in den Figuren dargestellt.

Es zeigen

Fig 1 einen Längsschnitt der neuen Vorrichtung,

Fig 2 eine Draufsicht der Vorrichtung nach der Erfindung,

Fig. 3 den Schnitt A-B aus Fig. 1,

Fig. 4 den Schnitt C-D aus Fig. 1,

Fig. 5 und

Fig. 6 Prinzipzeichnungen zur Arbeitsweise der neuen Vorrichtung und

Fig. 7, 8 und 9 verschiedene Ausbildungen im Innern des Schneidringes.

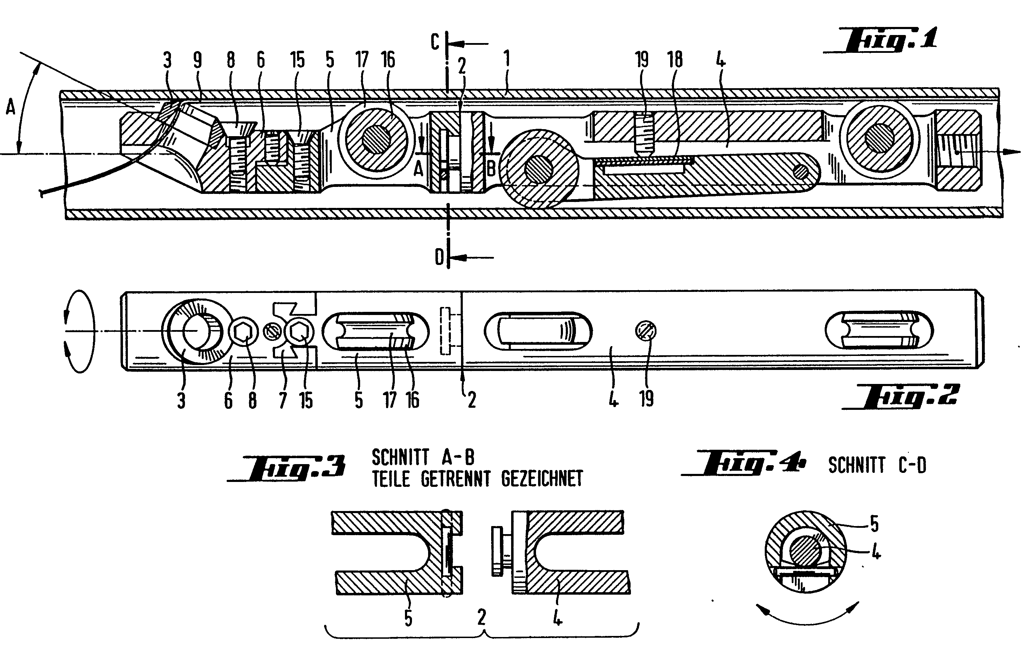

In Fig. 1 ist mit 1 ein innen zu entgratendes Rohr oder Profil bezeichnet. 2 ist der Grundkörper, in dem der Schneidring 3 mit seiner Ringfläche unter einem spitzen Winkel zur Längsachse des Rohres angeordnet ist. Wie aus Fig. 1, 2, 3 und 4 ersichtlich, ist der Grundkörper 2 zweckmäßigerweise geteilt und besteht aus einem feststehenden Teil 4 und einem daran angelenkten Teil 5. Letzteres ist um die Längsachse des Rohres oder Profils 1 drehbar. Der Schneidring 3 befindet sich in dem gezeichneten Ausführungsbeispiel in einem auswech selbaren Schneidringhalter 6, dessen Verbindung mit dem schwenkbaren Teil 5 als Schwalbenschwanz 7 ausgebildet ist.

Der Schneidring 3 ist mit einer außen an ihm an reifenden Spannschraube 8 befestigt. Dadurch ist im Gegensatz zu bekannten Vorrichtungen mit Pratzen-Innenspannung unter anderem eine gute Spanabfuhr durch das Innere des Schneidringes 3 möglich (Fig. 6).

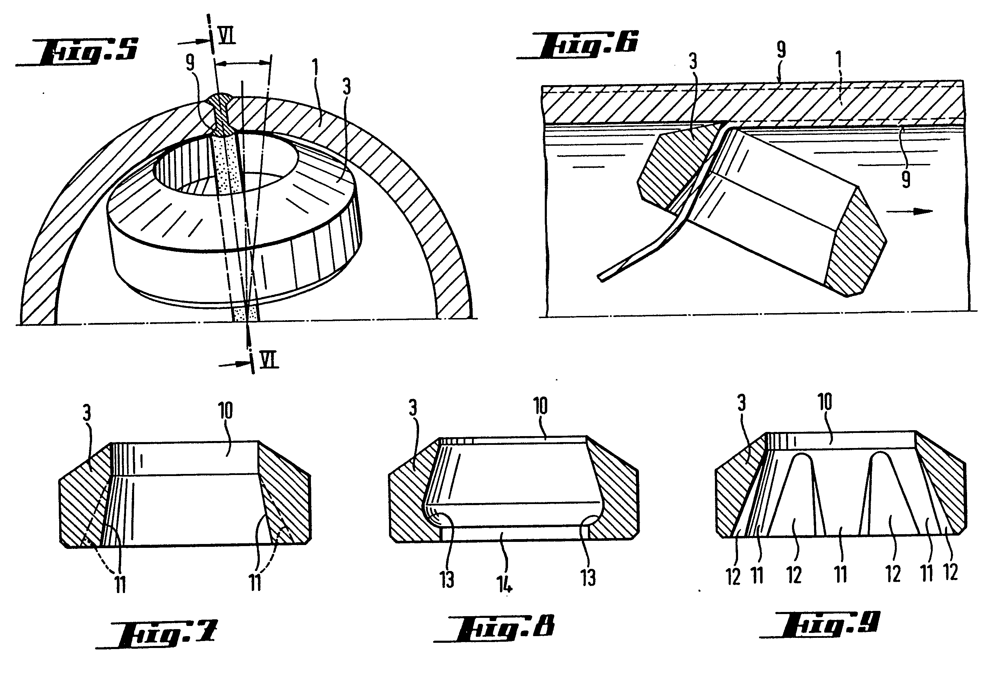

Das Wesentliche der Erfindung ist ein selbsttätiges Nachführen des Schneidringes 3 gegenüber dem Innengrat 9. Auch bei z. B. schräg verlaufendem Innengrat 9, wie das in Fig. 5 angedeutet ist, ergibt sich somit eine glatte Fläche und der Verschleiß des Schneidringes 3 ist wesentlich geringer als bei bekannten Vorrichtungen. Dies ist einmal auf den mit seiner Ringfläche unter einem spitzen Winkel zur Längsachse des Rohres angeordneten Schneidring 3 zurückzuführen, weil, wie in Fig. 5 dargestellt, eine verhältnismäßig breite Berührung zwischen Schneidring 3 und Rohr 1 vorhanden ist. Das Entgraten erfolgt mit einer ausgeprägt kreisbogenförmig wirkenden Schneide. Zum anderen ist durch das mögliche seitliche Schwenken eine gute Anpassung an den zu entfernenden Innengrat 9 erreichbar.

Durch die Außenspannung des Schneidringes 3 mit Hilfe der Spannvorrichtung 8 kann das Innere des Schneidringes 3 die Gegebenheiten des zu zerspanenden Materials angepaßt werden. So ist es möglich, gemäß Fig. 7 innen einen zylindrischen Abschnitt 10 und einen kegelstumpfförmigen Abschnitt 11 vorzusehen. Je nach Werkstoff des zu zerspanenden Innengrates kann der Kegelstumpf 11 eine unterschiedliche Neigung haben (gestrichelt angedeutet.)

In Fig. 9 ist gezeigt, daß im kegelstumpfförmigen Abschnitt 11 zusätzlich als Spanformstufe ausgebildete Führungsnuten 12 vorgesehen sein können. Diese Maßnahme hat kleine Spanwendel zur Folge und ist besonders für das Innenentgraten bei hohen Temperaturen geeignet.

Bei manchen Anwendungen ist eine lange Wendel des Spans erwünscht, was durch einen bauchigen Abschnitt 13 in Fig. 8 erreicht wird, dem ein zweiter zylindrischer Abschnitt 14 nachgeordnet ist.

Durch den austauschbaren Schneidringhalter 6 ist es möglich, innerhalb kurzer Zeit einen Schneidring 3 gleichen oder anderen Durchmessers oder anderer innerer Geometrie (Fig. 7 bis 9) einzusetzen. Wird die schwalbenschwanzförmige Verbindung 7 zwischen dem Schneidringhalter 6 und dem schwenkbaren Teil 5 schräg in Richtung Schneidring 3 verlaufend ausgebildet, so kann in den meisten Fällen eine Befestigung mit einer Schraube 15 entfallen, weil sich der Schneidringhalter 6 durch den beim Entgraten entstehenden Schnittdruck festklemmt.

Die erfindungsgemäße Anordnung des Schneidringes 3 erfolgt, wie umfangreiche Versuche ergeben haben, so, daß zwischen der Längsachse des Rohres oder Profils und dem Schneidring ein Winkel A von 20 bis 30° vorhanden ist. Es können selbstverständlich auch andere Winkel A gewählt werden, abhängig von der Arbeitsgeschwindigkeit und dem zu zerspanenden Werkstoff.

Die Führungsrolle 16 hat eine Rille 17, die beim Entgraten über den Innengrat 9 läuft und so mit dazu beiträgt, daß der schwenkbar gelagerte Schneidring 3 dem Innengrat 9 folgt.

In dem feststehenden Teil 4 ist z. B. eine Blattfeder 18 und eine Schraube 19 vorgesehen, wodurch das Werkzeug bzw. der Schneidring 3 in die gewünschte Schnittposition eingestellt werden kann.

Mit der erfindungsgemäßen Vorrichtung zum Innenentgraten ist ein im Aufbau einfaches und robustes Werkzeug geschaffen worden, das auch für hohe Arbeitsgeschwindigkeiten geeignet ist und einen ruhigen Lauf hat. Dazu kommen eine gute Oberfläche des entgrateten Rohres oder Profils und eine hohe Standzeit des Schneidringes 3.

## Patentansprüche

1. Vorrichtung zum Innenentgraten längsnahtgeschweißter Rohre oder Profile (1), die einen in einem Grundkörper (2) angeordneten Schneidring (10) aufweist der in dem Rohr oder profil mit Hilfe von Rollen (16) geführt ist wobei die Achse seiner Ringfläche unter einem spitzen Winkel (A) die Längsachse des Rohres schneidet, dadurch gekennzeichnet, daß der vordere Teil (5) des Grundkörpers (2) mit dem Schneidring (10) um die Längsachse des Rohres oder Profils (1) frei drehbar angeordnet ist.

2. Vorrichtung nach Anspruch 1, dadurch gekennzeichnet, daß der Grundkörper (2) aus einem feststehenden (4) und dem daran angelenkten drehbaren Teil (5) besteht, auf dem der Schneidring (3) an einem auswechselbaren Schneidringhalter (6) befestigt ist.

3. Vorrichtung nach Anspruch 2, dadurch gekennzeichnet, daß die Verbindung zwischen auswechselbarem Schneidringhalter (6) und drehbarem Teil (5) schwalbenschwanzförmig (7) ausgebildet ist.

4. Vorrichtung nach Anspruch 1, dadurch gekennzeichnet, daß der Schneidring (3) mit einer außen an ihm angreifenden Spannschraube (8) befestigt ist.

5. Vorrichtung nach Anspruch 1, dadurch gekennzeichnet, daß der Schneidring (3) innen einen zylindrischen Abschnitt (10) und daran anschließend einen kegelstumpfförmigen Abschnitt (11) aufweist.

6. Vorrichtung nach Anspruch 5, dadurch gekennzeichnet, daß der kegelstumpfförmige Abschnitt (11) als Spanformstufe ausgebildete Führungsnuten (12) aufweist.

7. Vorrichtung nach Anspruch 1, dadurch gekennzeichnet, daß der Schneidring (3) innen einen ersten zylindrischen (10), einen bauchigen (13) und einen zweiten (14) zylindrischen Abschnitt aufweist.

8. Vorrichtung nach Anspruch 1, dadurch gekennzeichnet, daß der Schneidring (3) unter einem Winkel (A) von 20 bis 30° zur Längsachse des Rohres oder Profils (1) angeordnet ist.

## Claims

1. A device for internally deburring longitudinally welded tubes or profiles (1) comprising a cutting ring (10) which is disposed in a base member (2) and which is guided in the tube or profile by means of rollers (16), the axis of its annular surface intersecting the longitudinal axis of the tube at an acute angle, characterised in that the front part (5) of the base member (2) is disposed to be freely rotatable with the cutting ring (10) about the longitudinal axis of the tube or profile (1).

2. A device according to claim 1, characterised in that the base member (2) consists of a fixed part (4) and the rotatable part (5) which is pivotally connected thereto and on which the cutting ring (3) is fixed on an interchangeable cutting ring holder (6).

3. A device according to claim 2, characterised in that the connection between the interchangeable cutting ring holder (6) and the rotatable part (5) is a dovetail connection (7).

4. A device according to claim 1, characterised in that the cutting ring (3) is fixed by a clamp screw (8) acting externally on it.

5. A device according to claim 1, characterised in that the cutting ring has internally a cylindrical portion (10) followed by a frusto-conical portion (11).

6. A device according to claim 5, characterised in that the frusto-conical portion (11) has guide grooves (12) constructed as chip deflectors.

7. A device according to claim 1, characterised in that the cutting ring (3) has internally a first cylindrical portion (10), a bellied portion (13) and a second cylindrical portion (14).

8. a device according to claim 1, characterised in that the cutting ring (3) is disposed at an angle (A) of 20 to 30° to the longitudinal axis of the tube or profile (1).

**Revendications**

1. Dispositif pour ébarber intérieurement des tuyaux ou des profilés (1) à cordon de soudure longitudinal qui comprend une bague coupante (10) qui est disposée dans une embase (2) et qui est guidée dans le tuyau ou dans le profilé à l'aide de galets (16), l'axe de sa surface annulaire faisant un anale aigu (A) avec l'axe longitudinal du tuyau, caractérisé en ce que la partie antérieure (5) de l'embase (2) est montée de manière à pouvoir tourner librement avec la bague coupante (10) autour de l'axe longitudinal du tuyau ou du profilé (1).

2. Dispositif suivant la revendication 1, caractérisé en ce que l'embase (2) est constituée d'une partie fixe (4) et d'une partie (5) tournante qui y est articulée et sur laquelle la bague coupante (3) est fixée à un porte-bague coupante (6) susceptible d'être remplacé.

3. Dispositif suivant la revendication 2, caractérisé en ce que la liaison entre le porte-bague coupante (6) susceptible d'être remplacé et la partie tournante (5) est à queue d'aronde (7).

4. Dispositif suivant la revendication 1, caractérisé en ce que la bague coupante (3) est fixée par une vis de serrage (8) l'attaquant de l'extérieur.

5. Dispositif suivant la revendication 1, caractérisé en ce que la bague coupante (3) a, à l'intérieur, un tronçon (10) cylindrique et un tronçon (11) tronconique s'y raccordant.

6. Dispositif suivant la revendication 5, caractérisé en ce que le tronçon (11) tronconique comporte des gorges de guidage (12) constituées en redan de conformation descope aux.

7. Dispositif suivant la revendication 1, caractérisé en ce que la bague coupante (3) comprend, à l'intérieur, un premier tronçn (10) cylindrique, un tronçon (13) convexe et un second tronçon (14) cylindrique.

8. Dispositif suivant la revendication 1, caractérisé en ce que la bague coupante fait un angle (A) de 20 à 30° avec l'axe longitudinal eu tuyau ou du profilé (1).

**Fig.1**

**Fig.2**

**Fig.3** SCHNITT A-B
TEILE GETRENNT GEZEICHNET

**Fig.4** SCHNITT C-D

0 150 414

Fig.5 Fig.6 Fig.7 Fig.8 Fig.9